# EUROPEAN PATENT APPLICATION

(11) **EP 4 707 011 A1**
(43) Date of publication of application: **11.03.2026**
(21) Application number: 25197072.9
(22) Date of filing: 20.08.2025
(51) Int. Cl.: B60K 1/04

(54) **PLUG-IN HYBRID ELECTRIC VEHICLE**

(30) Priority: 29.08.2024 JP 2024147279
(71) Applicant: TOYOTA JIDOSHA KABUSHIKI KAISHA, Toyota-shi, Aichi-ken 471-8571 (JP)
(72) Inventor: KOYANAGI, Hirotaka, Toyota-shi, 471-8571 (JP); KUSAKA, Hiroto, Toyota-shi, 471-8571 (JP)
(74) Representative: D Young & Co LLP

(57) **Abstract**

A pickup truck-type plug-in hybrid electric vehicle includes a battery configured to be charged with electric power supplied from outside the vehicle, a vehicle on-board charging unit that converts electric power supplied from outside the vehicle and supplies the converted electric power to the battery, a power control unit that controls electric power of a motor, a cabin section including a passenger compartment in which, a seat is installed, an engine compartment section including an engine compartment in which an engine is installed, and a cargo section including a truck bed that opens upward. The vehicle on-board charging unit and the power control unit are disposed separately in two of three regions including a region in the cabin section that is below the seat, a region in the cargo section that is below the truck bed, and a region adjacent to the motor.

## Description

### CROSS-REFERENCE TO RELATED APPLICATIONS

This application is based upon and claims the benefit of priority from Japanese Patent Application No. 2024-147279, filed on August 29, 2024, the entire contents of which are incorporated herein by reference.

### BACKGROUND

### 1. Field

The present disclosure relates to a pickup truck-type plug-in hybrid electric vehicle.

### 2. Description of Related Art

Japanese Patent No. 4873016 discloses a plug-in hybrid electric vehicle (hereinafter referred to as PHEV) having a unibody vehicle body structure.

A PHEV includes two drive sources (an engine and a motor), as well as a high-capacity battery. A PHEV further includes high-voltage electrical units electrically connected to the battery. Examples of such high-voltage electrical units include a power control unit for the motor and a vehicle on-board charging unit. In the PHEV described in the above publication, the battery is installed beneath the rear seat.

There is a demand for vehicles capable of providing installation space for both the battery and the high-voltage electrical units.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a pickup truck-type plug-in hybrid electric vehicle includes an engine, a battery, a motor, a vehicle, a power control unit, a cabin section, an engine compartment section, a cargo section, and a frame. The engine generates, through combustion of fuel, rotational driving force to be transmitted to a wheel. The battery is configured to be charged with electric power supplied from outside the vehicle. The motor is configured to generate the rotational driving force using electric power supplied from the battery. The vehicle on-board charging unit converts electric power supplied from outside the vehicle and supplies the converted electric power to the battery. The power control unit controls electric power of the motor. The cabin section includes a passenger compartment. A seat on which an occupant sits is installed in the passenger compartment. The engine compartment section is located forward of the cabin section and including an engine compartment in which the engine is installed. The cargo section is located rearward of the vehicle and including a truck bed that opens upward. The frame includes left and right side members that extend in a vehicle longitudinal direction through a region in the cabin section that is below the passenger compartment and a region in the cargo section that is below the truck bed. The vehicle on-board charging unit and the power control unit are disposed separately in two of three regions including a region in the cabin section that is below the seat, a region in the cargo section that is below the truck bed, and a region adjacent to the motor.

Other features and aspects will be apparent from the following detailed description, the drawings, and the claims.

### BRIEF DESCRIPTION OF THE DRAWINGS

Fig. 1 is a side view showing the arrangement of various components of a plug-in hybrid electric vehicle according to an embodiment.
Fig. 2 is a top view showing the arrangement of a drivetrain and an underfloor structure of the plug-in hybrid electric vehicle of the embodiment.
Fig. 3 is a top view showing the arrangement of a battery and a high-voltage electrical unit of the plug-in hybrid electric vehicle of the embodiment.
Fig. 4 is a diagram showing the arrangement of a battery and a high-voltage electrical unit in a plug-in hybrid electric vehicle according to a modification.
Fig. 5 is a diagram showing the arrangement of a battery and a high-voltage electrical unit in a plug-in hybrid electric vehicle according to another modification.
Fig. 6 is a diagram showing the arrangement of a battery and a high-voltage electrical unit in a plug-in hybrid electric vehicle according to a further modification.
Fig. 7 is a diagram showing the arrangement of a battery and a high-voltage electrical unit in a plug-in hybrid electric vehicle according to yet another modification.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

In general, a pickup truck includes a truck bed that opens upward and is located rearward of a cabin. Many pickup trucks include a body having a frame structure. A variety of components, including a transmission, a propeller shaft, an exhaust pipe, and a fuel tank, are disposed beneath the floor of a pickup truck. Therefore, when plug-in hybrid equipment is installed in a pickup truck, it may be necessary to raise the floor height in order to provide space beneath the floor for accommodating a battery and a high-voltage electrical unit. However, users expect a pickup truck-type vehicle to include a cabin and a truck bed capable of carrying large-volume loads. Raising the floor to accommodate the battery and a high-voltage electrical unit reduces the available volume of the cabin and the truck bed, making it difficult to meet user demands.

The present embodiment provides a pickup truck-type PHEV 10 configured to make space available for installing high-voltage electrical units.

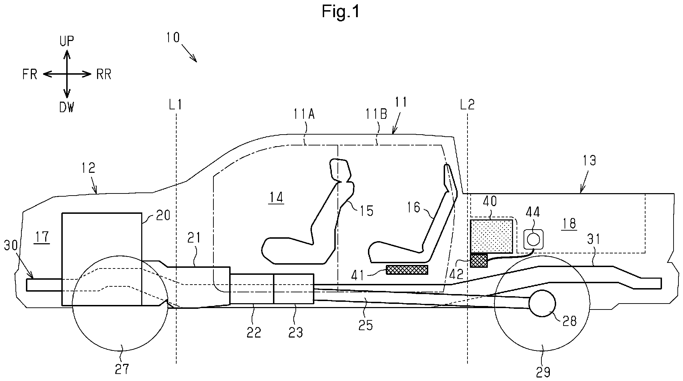

The PHEV 10 according to the embodiment will now be described with reference to Figs. 1 to 3. Arrows shown in the drawings used in the following description indicate directions in relation to the vehicle. Specifically, FR indicates the forward direction, RR indicates the rearward direction, UP indicates the upward direction, DW indicates the downward direction, LF indicates the leftward direction, and RF indicates the rightward direction.

The PHEV 10 includes a battery 40 configured to be charged with electric power supplied from outside the vehicle. The PHEV 10 includes an engine 20 and a motor 22 as drive sources that generate rotational driving force to be transmitted to four wheels, i.e., left and right front wheels 27 and left and right rear wheels 29. The engine 20 generates rotational driving force through combustion of fuel. The motor 22 generates rotational driving force using electric power supplied from the battery 40.

The PHEV 10 of the present embodiment is configured as a pickup truck. The pickup truck-type PHEV 10 includes three sections, i.e., a cabin section 11, an engine compartment section 12 forward (FR) of the cabin section 11, and a cargo section 13 rearward (RR) of the cabin section 11. The cabin section 11 is provided with a passenger compartment 14, which accommodates occupants. The engine compartment section 12 includes an engine compartment 17 in which the engine 20 is arranged longitudinally. The PHEV 10 of the present embodiment is equipped with an engine 20 having a V-type cylinder arrangement. The cargo section 13 includes a truck bed 18 that opens upward (UP).

In the drawings, the cabin section 11 is a region in the PHEV 10 that is rearward (RR) of dotted line L1 and forward (FR) of dotted line L2. The engine compartment section 12 is a region in the PHEV 10 that is forward (FR) of dotted line L1. The cargo section 13 is a region in the PHEV 10 that is rearward (RR) of dotted line L2. Front-row seats 15 and a rear-row seat 16, which is positioned rearward (RR) of the front-row seats 15, are installed as seat on which occupants are seated in the passenger compartment 14 of the PHEV 10. Front and rear doors 11A and 11B are provided on the left and right sides of the PHEV 10 of the cabin section 11. In the PHEV 10 of the present embodiment, the regions of the side surfaces of the cabin section 11 where the doors 11A and 11B are provided serve as entry openings for occupants.

The PHEV 10 is provided with a charging inlet 44 for receiving a charging plug of a charging device located outside the vehicle. The charging inlet 44 is provided in a region in a side surface of the PHEV 10 that is rearward (RR) of the door 11B. In Fig. 1, the charging inlet 44 is provided on the side surface of the cargo section 13 on a vehicle left side (LF).

### Configuration of Drivetrain

Next, the configuration of the drivetrain of the PHEV 10 will be described. The drivetrain of the PHEV 10 includes the engine 20, a transmission 21, a motor 22, and a transfer case 23. The drivetrain of the PHEV 10 includes propeller shafts 24 and 25 for the front wheels 27 and the rear wheels 29, respectively. The propeller shafts 24 and 25 are each connected to the engine 20 via the transfer case 23, the motor 22, and the transmission 21. The propeller shaft 24 for the front wheels 27 is connected to the left and right front wheels 27 via a differential 26. The propeller shaft 25 for the rear wheels 29 is connected to the left and right rear wheels 29 via a differential 28.

### Configuration of Underfloor Structure

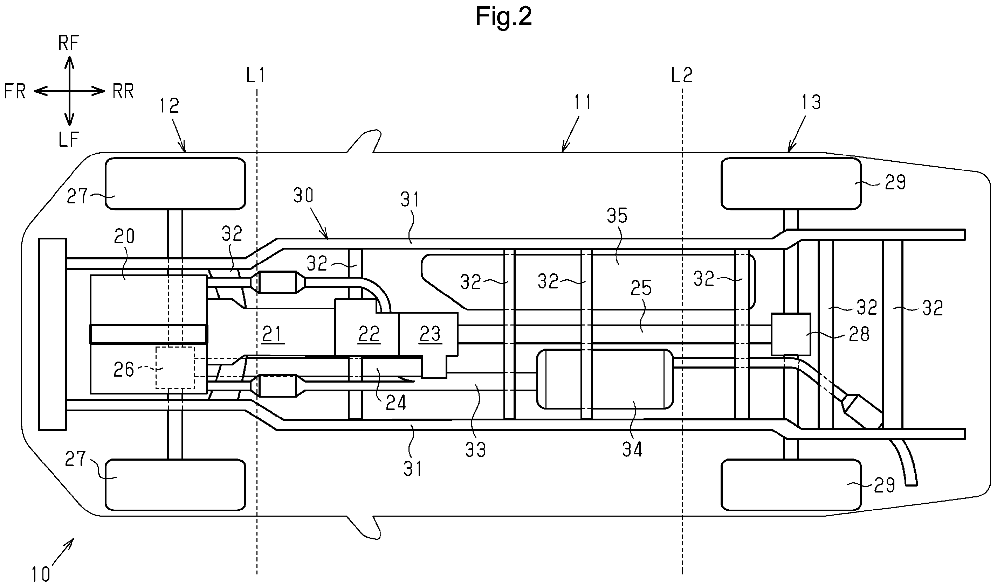

The configuration of the underfloor structure of the PHEV 10 will now be described with reference to Fig. 2. The space under the floor of the PHEV 10 refers to a region below (DW) floor panels of the passenger compartment 14 and the truck bed 18.

A frame 30 is provided under the floor of the passenger compartment 14 and the truck bed 18 of the PHEV 10. The frame 30 of the PHEV 10 of the present embodiment is a ladder-type frame having left and right side members 31 and multiple cross members 32 connecting the side members 31. The left and right side members 31 are each disposed so as to extend in the vehicle longitudinal direction through a region in the cabin section 11 that is below (DW) the passenger compartment 14. As shown in Fig. 2, the propeller shaft 25 for the rear wheel 29 extends in the vehicle longitudinal direction through the region in the cabin section 11 that is below (DW) the passenger compartment 14.

Further, an exhaust pipe 33 that guides exhaust gas of the engine 20 rearward (RR) is disposed under the floor of the PHEV 10. The exhaust pipe 33 extends in the vehicle longitudinal direction through the region in the cabin section 11 that is below (DW) the passenger compartment 14. A muffler 34 is installed at an intermediate portion of the exhaust pipe 33. The muffler 34 is disposed in the region in the cabin section 11 that is below (DW) the passenger compartment 14. Further, a fuel tank 35 for storing fuel for the engine 20 is installed under the floor of the PHEV 10. The propeller shaft 25 for the rear wheels 29 is disposed in a region between the exhaust pipe 33 and the fuel tank 35 in the vehicle width direction.

### Configuration of Power Supply System

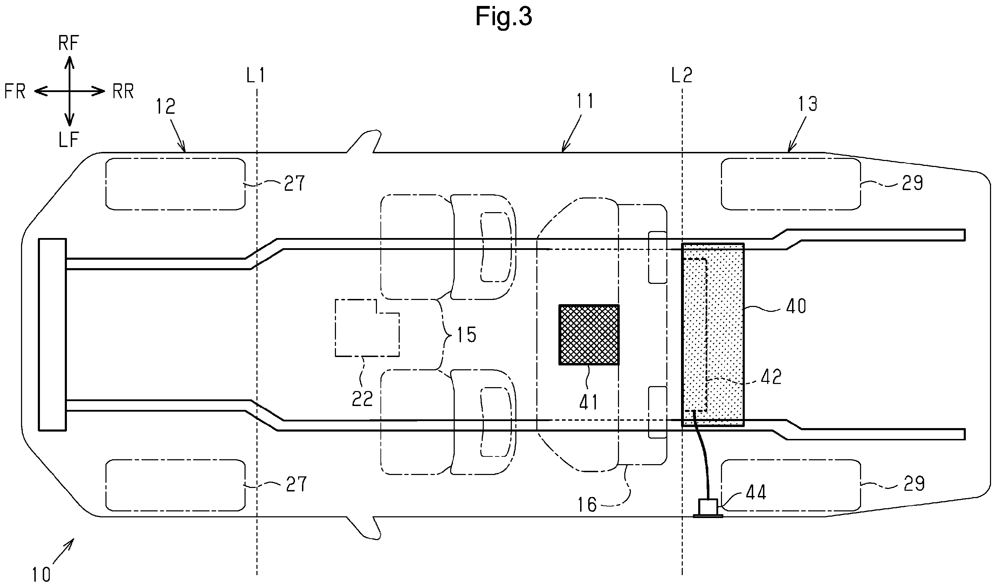

Next, the configuration of the power supply system of the PHEV 10 will be described with reference to Fig. 3.

The PHEV 10 includes a battery 40 that is chargeable from the outside. The battery 40 primarily includes multiple cells housed within a case. Further, the PHEV 10 includes a power control unit 41 and a vehicle on-board charging unit 42 as high-voltage electrical units directly and electrically connected to the battery 40. The battery 40 is connected to the motor 22 via the power control unit 41. The motor 22 generates rotational driving force to be transmitted to the front wheels 27 and the rear wheels 29 using electric power supplied from the battery 40. The power control unit 41 is a unit that performs power control of the motor 22, and includes a circuit such as an inverter. The battery 40 is connected to the charging inlet 44 via a vehicle on-board charging unit 42. The vehicle on-board charging unit 42 functions as a vehicle on-board charger that charges the battery 40 by converting electric power supplied from the outside of the PHEV 10 through the charging inlet 44 and supplying the converted electric power to the battery 40. The vehicle on-board charging unit 42 may also include a power conversion function that steps down the high-voltage power stored in the battery 40 and supplies it to low-voltage electrical devices of the PHEV 10.

In the PHEV 10 according to the present embodiment, the battery 40 is disposed in a lower portion (DW) of the truck bed 18 in the cargo section 13. A front portion (FR) of the floor panel of the truck bed 18 is formed to have a shape that bulges upward (UP). The battery 40 is disposed at a position below (DW) the bulging portion of the floor panel. The battery 40 may be installed on a floor panel that is formed flat as a whole, and a cover that covers the area including the battery 40 may be provided. In this case, in the portion where the battery 40 is installed, the outer surface of the cover substantially forms the floor surface of the truck bed 18.

On the other hand, the vehicle on-board charging unit 42 is disposed in a lower portion (DW) of the truck bed 18 in the cargo section 13, and is located in a region below (DW) the battery 40. The power control unit 41 is disposed in a region in the cabin section 11 that is below (DW) the rear-row seat 16. The power control unit 41 and the vehicle on-board charging unit 42 are disposed so as to be located above (UP) the side members 31, the propeller shaft 25, the exhaust pipe 33, and the fuel tank 35.

### Operation and Advantages of the Embodiment

Components such as the left and right side members 31, the propeller shaft 25, the exhaust pipe 33, and the fuel tank 35 are disposed in regions in the PHEV 10 of the present embodiment that are below (DW) the passenger compartment 14 and the truck bed 18. As a result, it is difficult to provide sufficient installation space beneath the floor of the passenger compartment 14 and truck bed 18 to collectively house the battery 40, the power control unit 41, and the vehicle on-board charging unit 42.

In contrast, in the PHEV 10 of the present embodiment, the power control unit 41 is disposed in a region in the cabin section 11 that is below (DW) the rear-row seat 16. Also, the vehicle on-board charging unit 42 is disposed in a region in the cargo section 13 that is below (DW) the truck bed 18. This separate arrangement of the power control unit 41 and the vehicle on-board charging unit 42 provides sufficient installation space for high-voltage electrical units even in a PHEV 10 having components such as the propeller shaft 25 installed beneath the floor.

The PHEV 10 of the present embodiment described above has the following advantages.
(1) The power control unit 41 and the vehicle on-board charging unit 42 are disposed separately in the region in the cabin section 11 that is below (DW) the rear-row seat 16 and in the region in the cargo section 13 that is below (DW) the truck bed 18. Therefore, even in a PHEV 10 in which components such as the propeller shaft 25 are arranged under the floor, an installation space is readily provided for the high-voltage electrical units.
(2) As compared with a case in which the power control unit 41 and the vehicle on-board charging unit 42 are collectively installed in the cabin section 11, reduction in the occupant space in the passenger compartment 14 is limited.
(3) As compared with a case in which the power control unit 41 and the vehicle on-board charging unit 42 are collectively installed in the cargo section 13, reduction in the cargo space in the truck bed 18 is limited.
(4) In the PHEV 10 of the present embodiment, the power control unit 41 is disposed in the region in the cabin section 11 that is below (DW) the rear-row seat 16, and the vehicle on-board charging unit 42 is disposed in the region in the cargo section 13 that is below (DW) the truck bed 18. In such a case, the distance between the motor 22 and the power control unit 41 is shorter than in a case in which the power control unit 41 is disposed in the cargo section 13. This facilitates the routing for connecting the power control unit 41 to the motor 22.
(5) In the PHEV 10 of the present embodiment, the charging inlet 44 is provided in a region rearward (RR) of the doors 11A and 11B serving as entry openings for occupants. The vehicle on-board charging unit 42 is disposed in a region in the cargo section 13 that is below (DW) the truck bed 18. In such a case, the distance between the charging inlet 44 and the vehicle on-board charging unit 42 is shorter than that in a case in which the vehicle on-board charging unit 42 is disposed at a portion below (DW) the rear-row seat 16. This facilitates the routing for connecting the charging inlet 44 to the vehicle on-board charging unit 42.

### Other Embodiments

The above-described embodiment may be modified as follows. The above-described embodiment and the following modifications can be combined as long as the combined modifications remain technically consistent with each other.

### Arrangement of the Battery and the High-Voltage Electrical Unit

The arrangement of the battery 40, the power control unit 41, and the vehicle on-board charging unit 42 can be changed as follows. In any configuration, separately disposing the power control unit 41 and the vehicle on-board charging unit 42 at different locations facilitates provision of installation space for these components.

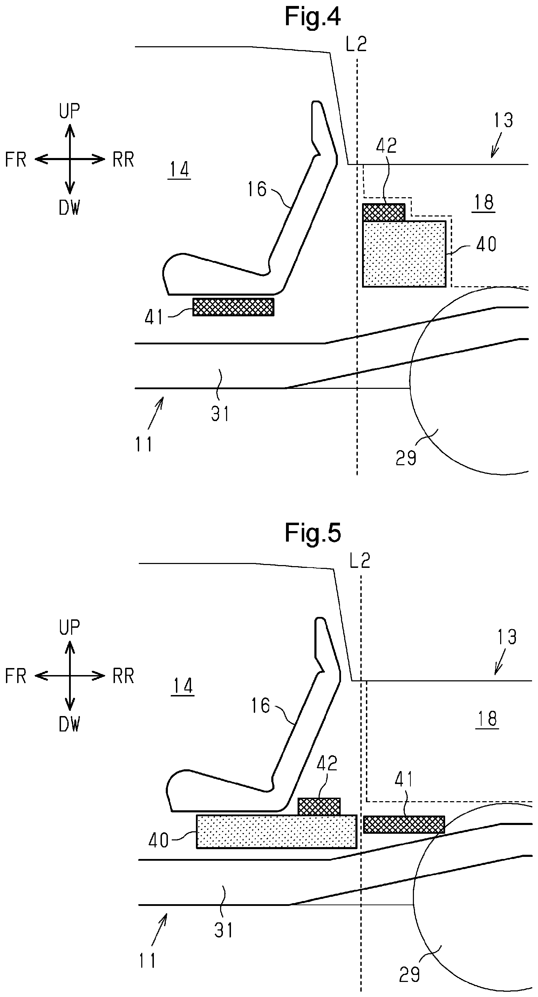

As shown in Fig. 4, the vehicle on-board charging unit 42 may be disposed in a region in the cargo section 13 that is below (DW) the truck bed 18 and above (UP) the battery 40.

As shown in Fig. 5, the vehicle on-board charging unit 42 may be disposed next to a lower portion (DW) of the rear-row seat 16 in the cabin section 11, and the power control unit 41 may be disposed in a region in the cargo section 13 that is below (DW) the truck bed 18. In the case of Fig. 5, the battery 40 is disposed, together with the vehicle on-board charging unit 42, in a region in the cabin section 11 that is below (DW) the rear-row seat 16. In Fig. 5, the arrangement of the battery 40 may alternatively be modified such that it is located in a region in the cargo section 13 that is below (DW) the truck bed 18.

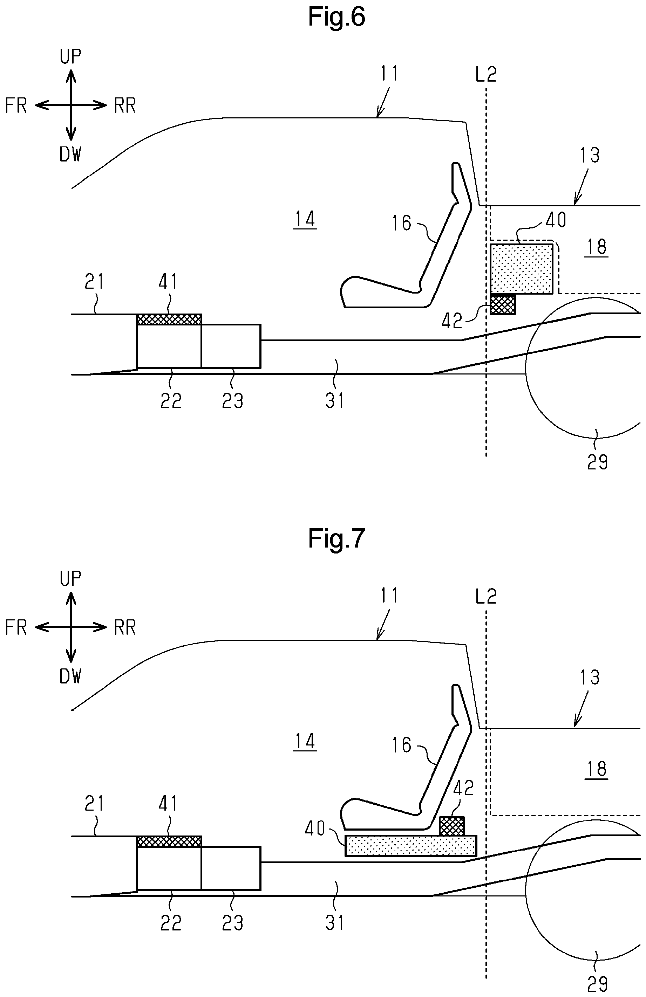

As shown in Fig. 6, the vehicle on-board charging unit 42 may be disposed in a region in the cargo section 13 that is below (DW) the truck bed 18, and the power control unit 41 may be disposed in a region adjacent to the motor 22. In the case of Fig. 6, the power control unit 41 is located above (UP) the motor 22 and installed integrally with the motor 22. Also, in the case of Fig. 6, the battery 40 is disposed, together with the vehicle on-board charging unit 42, in a lower portion (DW) of the truck bed 18 in the cargo section 13.

As shown in Fig. 7, the vehicle on-board charging unit 42 may be disposed in a region in the cabin section 11 that is below (DW) the rear-row seat 16, and the power control unit 41 may be disposed in a region adjacent to the motor 22. In the case of Fig. 7, the power control unit 41 is located above (UP) the motor 22 and installed integrally with the motor 22. Also, in the case of Fig. 7, the battery 40 is disposed, together with the vehicle on-board charging unit 42, in a region in the cabin section 11 that is below (DW) the rear-row seat 16.

The power control unit 41 may be disposed in a region adjacent to the motor 22 that is different from the regions shown in Figs. 6 and 7. For example, the power control unit 41 may be disposed to the side of or below the motor 22. Alternatively, the power control unit 41 may be housed within the case of the motor 22.

The vehicle on-board charging unit 42 may be disposed in a region adjacent to the motor 22, while the power control unit 41 may be disposed in a region in the cabin section 11 that is below (DW) the rear-row seat 16. The vehicle on-board charging unit 42 may be disposed in a region adjacent to the motor 22, while the power control unit 41 may be disposed in a region in the cargo section 13 that is below (DW) the truck bed 18.

The battery 40 may be disposed in a region that is different from both the region in the cabin section 11 that is below (DW) the rear-row seat 16 and the region in the cargo section 13 that is below (DW) the truck bed 18. For example, if a sufficient installation space can be provided between the left and right side members 31 of the frame 30, the battery 40 may be disposed between the left and right side members 31.

### Other Modifications

If wiring for connection to the vehicle on-board charging unit 42 can be routed appropriately, the charging inlet 44 may be installed at a location different from that in the above-described embodiment.

As the engine 20, an engine having a cylinder arrangement other than the V-type may be employed. Additionally, the engine 20 may be transversely mounted within the engine compartment 17.

In the above-described embodiment and modifications, the battery 40, the power control unit 41, and the vehicle on-board charging unit 42, which are disposed in the regions in the cabin section 11 that are below (DW) the rear-row seat 16, may be disposed in a region below (DW) the front-row seats 15.

In the passenger compartment 14 of the PHEVs 10, 100, two rows of seats are arranged in the front-rear direction, but the layout of the seats can be changed. In such cases, the battery 40, the power control unit 41, and the vehicle on-board charging unit 42, which are disposed in regions below (DW) the rear-row seat 16 in the above-described embodiment and modifications, may instead be disposed in a region below (DW) any seat.

The arrangement of components such as the propeller shaft 25, the exhaust pipe 33, the muffler 34, and the fuel tank 35 under the floor of the PHEV 10 may be changed. For example, the PHEV 10 may be configured such that the propeller shaft 25 is disposed between the exhaust pipe 33 and the fuel tank 35 in the vehicle width direction.

The configuration of the drivetrain of the PHEV 10 can be changed. For example, the drivetrain of the PHEV 10 may be configured to drive the front wheels 27 and the rear wheels 29 via separate, independent drive systems. Alternatively, the drivetrain may be configured such that the PHEV 10 is a front-wheel drive vehicle.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuitry are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A pickup truck-type plug-in hybrid electric vehicle (10), comprising:
an engine (20) that generates, through combustion of fuel, rotational driving force to be transmitted to a wheel (27, 29);
a battery (40) configured to be charged with electric power supplied from outside the vehicle (10);
a motor (20) configured to generate the rotational driving force using electric power supplied from the battery (40);
a vehicle on-board charging unit (42) that converts electric power supplied from outside the vehicle (10) and supplies the converted electric power to the battery (40);
a power control unit (41) that controls electric power of the motor (20);
a cabin section (11) including a passenger compartment (14), a seat (15, 16) on which an occupant sits being installed in the passenger compartment (14);
an engine compartment section (12) located forward of the cabin section (11) and including an engine compartment (17) in which the engine (20) is installed;
a cargo section (13) located rearward of the vehicle (10) and including a truck bed (18) that opens upward; and
a frame (30) including left and right side members (31, 32) that extend in a vehicle longitudinal direction through a region in the cabin section (11) that is below the passenger compartment (14) and a region in the cargo section (13) that is below the truck bed (18),
wherein the vehicle (10) on-board charging unit and the power control unit are disposed separately in two of three regions including a region in the cabin section (11) that is below the seat (16), a region in the cargo section (13) that is below the truck bed (18), and a region adjacent to the motor (20).

2. The plug-in hybrid electric vehicle (10) according to claim 1, wherein
the power control unit (41) is disposed in the region in the cabin section (11) that is below the seat (16), and
the vehicle on-board charging unit (42) is disposed in the region in the cargo section (11) that is below the truck bed (18).

3. The plug-in hybrid electric vehicle (10) according to claim 2, further comprising a charging inlet (44) that serves as a receiving port for electric power from outside of the vehicle (10),
wherein the charging inlet (44) is provided in a region rearward of an entry opening for occupants provided in the cabin section (11) of the plug-in hybrid electric vehicle (10).

4. The plug-in hybrid electric vehicle (10) according to claim 2 or 3, wherein the battery (40) is disposed the region in the cargo section (13) that is below the truck bed (18).

5. The plug-in hybrid electric vehicle (10) according to claim 1, wherein
the vehicle on-board charging unit (42) is disposed in the region in the cabin section (13) that is below the seat (16), and
the power control unit (41) is disposed in the region in the cargo section (13) that is below the truck bed (16).

6. The plug-in hybrid electric vehicle (10) according to claim 5, wherein the battery (40) is disposed in the region in the cabin section (11) that is below the seat (16).
